# EUROPÄISCHE PATENTSCHRIFT

(11) **EP 2 333 154 B1**
(45) Veröffentlichungstag und Bekanntmachung des Hinweises auf die Patenterteilung: **24.02.2016**
(21) Anmeldenummer: 09178497.5
(22) Anmeldetag: 09.12.2009
(51) Int. Cl.: E01B 9/18, F16B 13/00

(54) **Schraubdübel für Schienenbefestigungen**
Screw-in dowel for rail fixings
Vis-cheville pour fixations de rails

(43) Veröffentlichungstag der Anmeldung: 15.06.2011
(73) Patentinhaber: Vossloh-Werke GmbH, 58791 Werdohl (DE)
(72) Erfinder: Bösterling, Winfried, 55809 Neuenrade (DE); Vorderbrück, Dirk, 58791 Werdohl (DE)
(74) Vertreter: Hoffmann Eitle

(56) Entgegenhaltungen:
- DE-A1- 19 845 696
- DE-U1- 8 706 556
- FR-A5- 2 105 593

## Beschreibung

### Gebiet der Erfindung

Die Erfindung betrifft einen Schraubdübel für das Einbetonieren in eine Eisenbahnschwelle oder Feste Fahrbahn und die kraftschlüssige Verbindung mit einer Schwellenschraube gemäß dem Anspruch 1. Weiterhin betrifft die Erfindung eine Eisenbahnschwelle oder Feste Fahrbahn mit mindestens einem erfindungsgemäßen Schraubdübel und einer zugehörigen Schwellenschraube gemäß Anspruch 5.

### Stand der Technik

Schraubdübel für das Einbetonieren in eine Eisenbahnschwelle dienen beim Eisenbahnbau zur Verbindung von Schiene und Schwelle. Dabei wird die Schienenbefestigung über Schwellenschrauben mit der Schwelle verbunden. Schraubdübel bestehen häufig aus Kunststoff und können bei der Herstellung einer Betonschwelle oder einer Festen Fahrbahn in diese eingegossen werden. Ein Grund für das Vorsehen eines Dübels aus Kunststoff besteht darin, dass eine elektrische Isolierung der Schwellenschraube gegenüber der Schwelle erfolgen soll.

Der Nachteil einer Paarung aus Bauelementen unterschiedlicher Materialien, wie Schraubdübel aus Kunststoff und Eisenbahnschwellen aus Beton, besteht aber darin, dass diese unterschiedliche Wärmeausdehnungen besitzen, so dass es aufgrund der gegenüber Beton größeren Wärmeausdehnung des für Dübel üblicherweise verwendeten Kunststoffmaterials zum einen zur Bildung von Spalten zwischen Dübel und dem umgebenden Beton der Schwelle kommen kann, gleichzeitig aber auch bei höheren Temperaturen hohe Radialspannungen im Dübel und umgebenden Beton entstehen, die sogar zu Radialrissen im Beton führen können. Aufgrund der Toleranzlage zwischen Schraube und Dübel besteht in der Regel dort ein Luftspalt, in welchen Wasser, Sand und Schmutzpartikel eindringen können. Insbesondere beim Eindringen von Wasser wird der elektrische Widerstand des Befestigungssystems stark herabgesetzt und können die immer höher werdenden technischen Anforderungen der Signaltechnik nicht mehr erfüllt werden. Andererseits führt gefrorenes Wasser im Winter zu erhöhten Radialspannungen.

Aus dem deutschen Gebrauchsmuster DE 87 06 556 U1 ist ein Schraubdübel bekannt, in dessen Hohlraum in einer Ringnut ein Dichtring angeordnet ist. Der Dichtring liegt mit einer Dichtlippe am Außenumfang der eingeschraubten Schwellenschraube an und verhindert das Eindringen von Feuchtigkeit über die Ebene des Dichtrings hinaus.

Die DE 198 45 696 A1 zeigt in einer bevorzugen Ausführungsform einen Dichtlippenring eines Abdichtungsmittels das aus einer vor Montage geschlossenen Membran besteht, die bei der Montage durch das in den Dübel eingeführte Befestigungsmittel durchbrochen wird.

### Darstellung der Erfindung

Der Erfindung liegt die Aufgabe zugrunde, einen Schraubdübel für das Einbetonieren in eine Eisenbahnschwelle sowie eine Eisenbahnschwelle oder Feste Fahrbahn mit mindestens einem derartigen Schraubdübel mit einer verbesserten Betriebssicherheit vorzuschlagen. Diese Aufgabe wird durch einen Schraubdübel mit den Merkmalen des Anspruchs 1 sowie eine Eisenbahnschwelle oder Feste Fahrbahn mit den Merkmalen des Anspruchs 5 gelöst. Bevorzugte Ausführungsformen der Erfindung folgen aus den übrigen Ansprüchen.

Erfindungsgemäß umfasst ein Schraubdübel für das Einbetonieren in eine Eisenbahnschwelle oder Feste Fahrbahn und die kraftschlüssige Verbindung mit einer Schwellenschraube einen Gewindeabschnitt mit außen am Schraubdübel angeordneten Außengewindegängen sowie innen im Schraubdübel angeordneten Innengewindegängen. Weiterhin umfasst der Schraubdübel einen im Einbauzustand nahe der Dübelöffnung gelegenen oberen Teilabschnitt ohne Außengewinde. Der Schraubdübel ist dadurch gekennzeichnet, dass im oberen Teilabschnitt ein Dichtelement aus einem Werkstoff mit hoher Elastizität angeordnet ist, das im Einbauzustand eine sich über die oberseitige Abschlussfläche des oberen Teilabschnitts hinaus nach oben erstreckende herauskragende Erhebung bildet sowie den freien Öffnungsquerschnitt des Innenraums des oberen Teilabschnitts verringert.

Der Werkstoff mit hoher Elastizität ist somit nicht nur in dem Inneren der Dübelöffnung angeordnet, um einen toleranzbedingten Spalt zwischen Schwellenschraube und Dübel abzudichten, sondern erstreckt sich nach oben über die Ebene der Dübelöffnung hinaus, wodurch bei bündig mit der Oberseite der Schwelle abschließendem oberen Teilabschnitt des Dübels der Werkstoff mit hoher Elastizität sich über die Oberseite der Schwelle hinaus nach oben erstreckt. Auf diese Weise wird eine Barriere geschaffen, welche verhindert, dass auf der Oberseite der Schwelle befindliches Wasser in die Dübelöffnung hineinfließen kann. Im Unterschied zu DE-U-87 06 556, bei der sich der Dichtring erst unterhalb der Dübelöffnung im Dübelhohlraum befindet, wird somit auf sehr wirksame Weise die Benetzung der Schwellenschraube mit Wasser verhindert.

Erfindungsgemäß ist der Werkstoff mit hoher Elastizität an dem oberen Teilabschnitt angespritzt. Auf diese Weise lässt sich der Montageaufwand weiter reduzieren, jedoch sind höhere Investitionsaufwendungen für ein Zwei-Komponenten-Spritzgießverfahren erforderlich, was allerdings bei Massenprodukten wie Schraubdübeln mit verringertem Vormontageaufwand gerechtfertigt ist.

Vorzugsweise ist das Außengewinde ein Rundgewinde, was sich in Bezug auf den Kraftschluss bei Radialspannungen zwischen Dübel und Betonmaterial als sehr günstig erwiesen hat.

Nach einer bevorzugten Ausführungsform umfasst der Schraubdübel weiterhin mindestens ein in Längsrichtung außen an dem Schraubdübel vorgesehenes Formschlusselement, vorzugsweise in Form mehrerer Stege. Derartige Formschlusselemente dienen dazu, ein unerwünschtes Verdrehen des Schraubdübels relativ zur Betonschwelle zu verhindern und tragen zur Funktionssicherheit des erfindungsgemäßen Schraubdübels bei.

Vorzugsweise ist der Werkstoff mit hoher Elastizität zusätzlich zumindest bereichsweise am Außenumfang des oberen Teilabschnitts als nachgiebige Ummantelung angeordnet. Diese Maßnahme besitzt den Vorteil, dass Rissbildung um den oberen Teilabschnitt des Schraubdübels verringert werden kann. Zum einen treten durch Wärmeausdehnungen Spannungen auf, die zur Rissbildung im Beton führen können, zum anderen aber können Risse auch durch die Überbeanspruchung des Randbereichs infolge der von der Schiene über die Schwellenschraube in den Dübel eingeleiteten Horizontalkräfte auftreten.

Die erfindungsgemäße Eisenbahnschwelle oder Feste Fahrbahn mit mindestens einem Schraubdübel nach der Erfindung ist so gestaltet, dass der Krafteingriff zwischen Schwellenschraube und Dübel in den tieferen Dübelbereich verlagert wird und entsprechend auch in den tieferen Bereich der Schwelle oder Festen Fahrbahn. Auf diese Weise lässt sich die Spannung reduzieren. Nach einer ersten Alternative umfasst die Eisenbahnschwelle oder Feste Fahrbahn dazu eine Schwellenschraube, die einen zylinderförmigen Abschnitt besitzt, der ein Außengewinde aufweist, wobei der Schraubdübel einen sich zur Einstecköffnung hin aufweitenden kegelförmigen Bereich aufweist. Auf diese Weise wird der Eingriff zwischen dem Gewinde der Schwellenschraube und dem Schraubdübel in den unteren Bereich des Dübels verlagert, d.h. in den tieferen Dübelbereich, der weiter von der Einstecköffnung entfernt liegt. Alternativ ist es auch möglich, die Schwellenschraube so zu gestalten, dass diese einen ersten und einen zweiten zylindrischen Abschnitt aufweist. Der erste zylindrische Abschnitt hat einen größeren Kerndurchmesser als der zweite zylindrische Abschnitt und liegt näher zum Schraubenkopf als der zweite zylindrische Abschnitt. Indem nur der zweite zylindrische Abschnitt zumindest bereichsweise ein Außengewinde aufweist wird ebenfalls der Krafteingriff zwischen Schwellenschraube und Schraubdübel in den tieferen Dübelbereich und damit in den tieferen Bereich der Schwelle oder Festen Fahrbahn verlagert. Unter dem Kerndurchmesser wird dabei derjenige Durchmesser verstanden, der durch die tiefsten Gewindenuten definiert wird.

Eine dritte Möglichkeit besteht darin, den Krafteingriff durch die Gestaltung des Dübelgewindes, z.B. durch das Vorsehen unterschiedlicher Dübelgewinde im oberen und im unteren Dübelbereich dahingehen zu beeinflussen, dass der Krafteingriff in den tieferen Dübelbereich verlagert wird.

### Kurze Beschreibung der Figuren

Nachfolgend wird die Erfindung rein beispielhaft anhand der beiliegenden Figuren beschrieben, in denen
- Figur 1: eine erste Ausführungsform eines Schraubdübels zeigt;
- Figur 2: einen nicht erfindungsgemäßen Schraubdübel zeigt;
- Figur 3: eine zweite Ausführungsform eines erfindungsgemäßen Schraubdübels zeigt;
- Figur 4: einen erfindungsgemäßen Schraubdübel mit eingedrehter Schwellenschraube darstellt; und
- Figur 5: eine alternative Gestaltung einer Schwellenschraube zur Verwendung mit einem erfindungsgemäßen Schraubdübel zeigt.

### Wege zur Ausführung der Erfindung

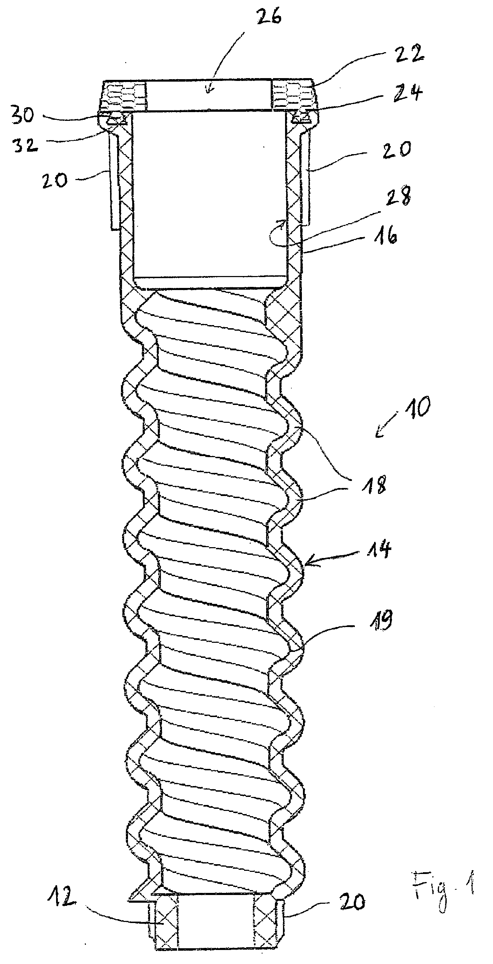

Der in Fig. 1 dargestellte Schraubdübel 10 besteht aus Kunststoffmaterial und gliedert sich in mehrere Abschnitte. Diese sind zum ersten ein unterer Teilabschnitt 12 mit im Wesentlichen zylindrischer Form, ein Gewindeabschnitt 14 sowie ein oberer Teilabschnitt 16. Im Bereich des Gewindeabschnitts 14 befinden sich zahlreiche Gewindegänge 18, die im Bereich des Außengewindes als Rundgewinde vorgesehen sind. Im Inneren des Gewindeabschnitts 14 besteht ein Innengewinde 19, das ebenfalls als Rundgewinde ausgeführt sein kann, sich jedoch in Bezug auf die Gewindesteigung sowie Gewindeteilung von dem Außengewinde 18 unterscheiden kann.

Der obere Teilabschnitt 16 ist im Wesentlichen zylinderförmig ausgeführt und einstückig mit dem Gewindeabschnitt 14 wie auch dem unteren Teilabschnitt 12 ausgebildet. Am Außenumfang des unteren Teilabschnitts 12 und/oder am Außenumfang des oberen Teilabschnitts 16 können Formschlusselemente in Form von in Längsrichtung des Schraubdübels verlaufenden Rippen 20 vorgesehen sein, welche nach dem Umgießen des Schraubdübels mit der Betonmasse einer Eisenbahnschwelle oder Festen Fahrbahn ein radiales Verdrehen des Schraubdübels relativ zu dem umgebenden Betonmaterial verhindern.

Der in Fig. 1 dargestellte Schraubdübel ist mit einem Dichtelement 22 versehen, das sich von der oberen Stirnfläche 24 des oberen Teilabschnitts 16 nach oben erstreckt. Wenn die Stirnfläche 24 bündig mit der Oberseite einer Eisenbahnschwelle abschließt, erstreckt sich somit das Dichtelement 22 über die Oberseite der Schwelle hinaus nach oben.

Das Dichtelement 22 verengt zudem die Öffnung 26 des Schraubdübels, so dass nach dem Eindrehen einer Schwellenschraube das Dichtelement 22 elastisch an der Schwellenschraube anliegt.

Die Erstreckung des Dichtelements 22 ist aus der Schnittansicht der Fig. 1 ersichtlich, die deutlich macht, dass sich das Dichtelement 22 in die lichte Öffnungsweite des oberen Teilabschnitts 16 hineinerstreckt, so dass die Öffnung 26 einen geringeren Durchmesser aufweist als die zylindrische Innenwand 28 des oberen Teilabschnitts 16.

Aus Fig. 1 ist zusätzlich ersichtlich, dass das Dichtelement 22 einen schwalbenschwanzförmigen Ringsteg 30 aufweist, der in eine schwalbenschwanzförmige Ringnut 32 in einem oberen Flanschabschnitt des oberen Teilabschnitts 16 formschlüssig eingreift.

Das Dichtelement 22 ist aus einem Werkstoff mit hoher Elastizität und somit auch hohem Verformungsvermögen hergestellt, so dass dieses beim Eindrehen der Schwellenschraube in den Schraubdübel sich der Außenkontur der Schraube anpassen und an diese anlegen kann. Darüber hinaus erstreckt sich das Dichtelement 22 über die oberseitige Stirnfläche 24 hinaus und kann somit nicht nur das Eindringen von Feuchtigkeit und Schmutz in den Schraubdübel mit eingesetzter Schwellenschraube unterbinden, sondern bereits als eine Überstrombarriere für auf der Schwellenoberseite angesammeltes Wasser dienen.

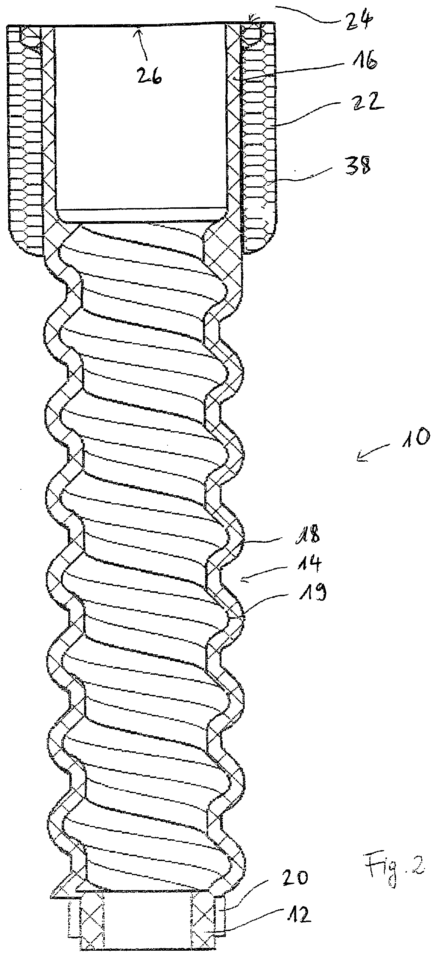

Der in Fig. 2 dargestellte Schraubdübel entspricht im Wesentlichen dem jenigen nach Figur 1, unterscheidet sich jedoch durch die Gestaltung des Dichtelements 22. Hier erstreckt sich das Dichtelement bis zur oberseitigen Abschlussfläche 24 des oberen Teilabschnitts des Schraubdübels und weist eine Öffnung 26 auf, deren Querschnitt dem der Außenwand des oberen Teilabschnitts entspricht. Zusätzlich weist aber das in Fig. 2 dargestellte Dichtelement eine am Außenumfang des oberen Teilabschnitts anliegende, zylindrische Schürze 38 auf. Die zylindrische Schürze ist dabei einstückig mit dem Dichtelement 22 ausgeführt und ebenfalls aus einem Material mit hoher Elastizität hergestellt. Der Vorteil der am Außenumfang vorgesehenen zylindrischen Schürze 38 besteht darin, dass diese die in einer Betonschwelle unweigerlich auftretenden Kontraktionen kompensieren kann, und verhindern hilft, dass Radialspannungen mit eventuellen Radialrissen vom Dübel ausgehen. Darüber hinaus wölbt sich das Dichtelement 22 bei radialem Druck nach oben und bildet da eine Überstrombarriere für auf der Oberseite der Schwelle oder Festen Fahrbahn angesammeltes Wasser.

Die Befestigung des in Fig. 2 dargestellten Dichtelements kann auf unterschiedliche Weise erfolgen. Zum einen kann eine formschlüssige Verbindung wie in Fig. 1 dargestellt zwischen dem oberen Teilabschnitt des Dübels und dem Dichtelement vorhanden sein. Alternativ ist es auch möglich, das Dichtelement zu befestigen, indem die elastische, zylindrische Schürze 38 aufgeweitet und auf den oberen Teilabschnitt des Schraubdübels aufgesteckt wird, wo diese durch ihre Elastizität eine ausreichend tragfähige reibschlüssige Verbindung mit dem oberen Teilabschnitt des Schraubdübels herstellt.

Alternativ ist es bei dem in Fig. 2 dargestellten Schraubdübel möglich, das Dichtelement 22 bei der Herstellung des Schraubdübels anzuspritzen, wozu eine bekannte 2K-Spritzgießtechnologie zur Anwendung gelangt. Diese Spritzgießtechnologie kann auch bei der Ausführungsform nach Figur 1 zur Anwendung gelangen. Auch der in Fig. 2 dargestellte Schraubdübel mit als separates Bauteil befestigtem Dichtelement oder angespritztem Dichtelement bietet die Möglichkeit, nicht nur den Öffnungsquerschnitt zwischen Schwellenschraube und Dübel abzudichten, sondern sich über die Oberseite der Betonschwelle zu erstrecken und damit eine Überstrombarriere für Wasser auf der Betonschwelle zu bieten.

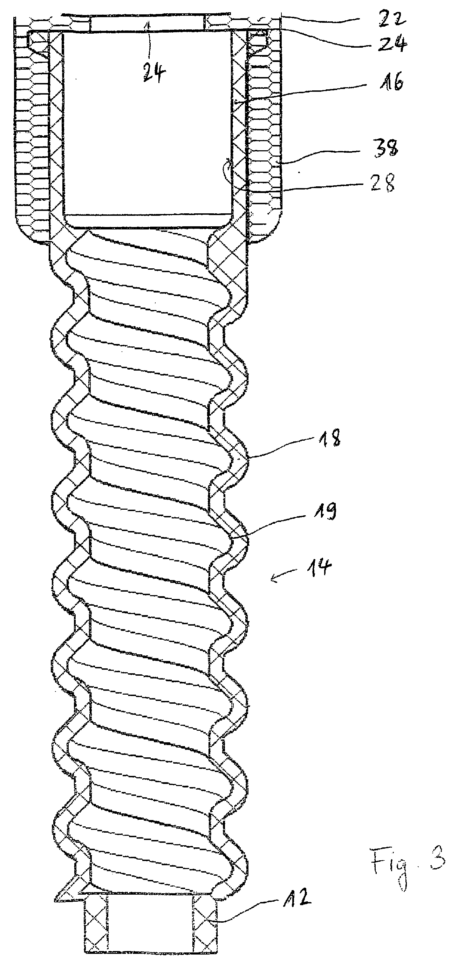

Die in Fig. 3 dargestellte Ausführungsform kombiniert Merkmale der in Figuren 1 und 2 bereits erläuterten Schraubdübel. Ähnlichkeiten in Bezug auf die Fig. 2 bestehen in Bezug auf das Vorsehen einer zylindrischen Schürze 38, die einstückig mit dem Dichtelement 22 ausgestaltet ist. Die Übereinstimmung zur Ausführungsform nach Fig. 1 besteht in Bezug auf den Öffnungsquerschnitt, der geringer ist als die zylindrische Innenwand 28 des oberen Teilabschnitts 16. Darüber hinaus erstreckt sich das Dichtelement über die Stirnfläche 24 nach oben und bildet somit auch im noch nicht komprimierten Zustand des Dichtelements und bei Einbau des Schraubdübels mit der Stirnfläche 24 bündig mit der Oberseite einer Eisenbahnschwelle oder Festen Fahrbahn bereits die gewünschte Überstrombarriere, die das Eindringen von Wasser oder Fremdpartikeln in die Dübelöffnung verhindern oder zumindest reduzieren soll.

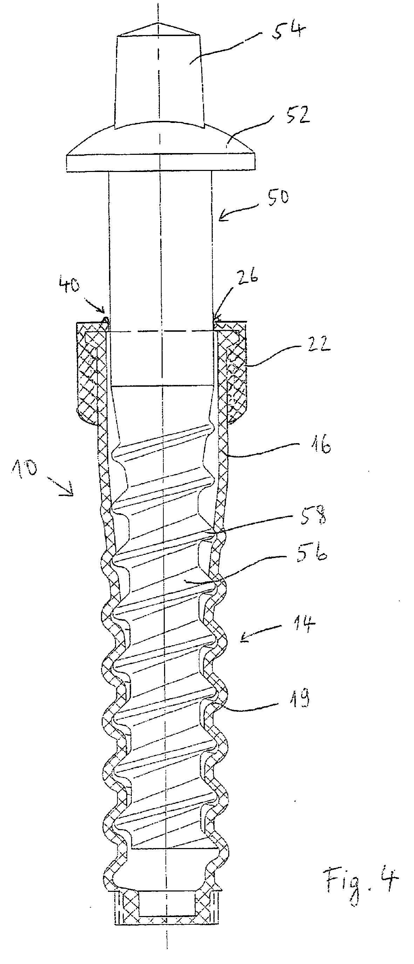

Bei den oben beschriebenen Ausführungsformen nach Figuren 1 und 3, sowie bei dem Schraubdübel nach fig. 2, weist der Schraubdübel 10 jeweils eine im Wesentlichen zylinderförmige Außenform auf. Hiervon unterscheidet sich die Ausführungsform nach Fig. 4, bei welcher der Abschnitt 16 des Schraubdübels keine zylindrische Form besitzt, sondern konisch zur Öffnung 26 hin aufgeweitet ist. Das in Fig. 4 dargestellte Dichtelement 22 entspricht im Wesentlichen dem nach Fig. 3, wobei ersichtlich ist, dass sich durch die elastische Verformung der Öffnung 26 im Bereich des Schraubenschafts ein Wulst 40 bildet, der ringförmig den Schraubenschaft umgibt und sich nach oben erstreckt.

Die Schraube 50 weist einen Schraubenkopf 52 mit einem Vierkant 54 sowie einen zylinderförmigen Abschnitt 56 mit einem Außengewinde 58 auf. Das Außengewinde 58 ist im Abschnitt 14 des Dübels in Eingriff mit dem Innengewinde 19 des Dübels, wohingegen in dem sich konisch aufweitenden Abschnitt 16 des Dübels 10 das Schraubengewinde 58 nur noch geringfügig oder aber überhaupt nicht mehr die Innenwandung des Dübels berührt. Auf diese Weise wird der Krafteingriff zwischen Schwellenschraube und dem umgebenden Dübel in den tieferen Dübelbereich 14 verlagert, um die oberflächennahen Spannungen im Schwellenbereich oder im Bereich der Festen Fahrbahn zu reduzieren.

Die in Fig. 4 dargestellte Ausführungsform stellt den Abstand zwischen Schraubengewinde und Dübel her, indem das Schraubengewinde im Wesentlichen zylinderförmig ist, der umgebende Dübel aber aufgeweitet ist.

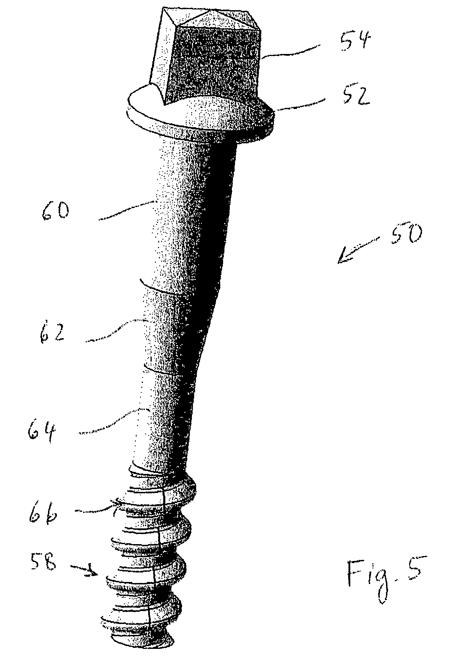

Alternativ hierzu kann aber auch die Schwellenschraube so gestaltet werden, dass das Gewinde nur in einem bestimmten Bereich der Schwellenschraube vorgesehen ist, wodurch ebenfalls der Krafteingriff zwischen Schwellenschraube und Dübel in den tieferen Dübelbereich verlagert werden kann. Die in Fig. 5 dargestellte Schwellenschraube stellt ein Beispiel hierfür dar und weist mehrere Abschnitte auf. Ein erster zylinderförmiger Abschnitt 60 schließt sich an den Schraubenkopf 52 an und weist kein Außengewinde auf. Der erste Abschnitt 60 geht über einen Zwischenabschnitt 62 in einen zweiten Abschnitt 64 über, der ebenfalls zylinderförmig ist, aber bereichsweise Gewindeerhebungen 66 des Außengewindes 58 aufweist. Ist der Aufnahmedübel zu der in Fig. 5 dargestellten Schwellenschraube 50 entsprechend geformt, so wird deutlich, dass die Gewindegänge 66 nur im unteren Bereich des Dübels in ein entsprechendes Innengewinde des Dübels eingreifen, während der erste Abschnitt 60 an einer glatten, d.h. nicht mit einem Innengewinde versehenen Wand des Dübels anliegt. Auch diese Maßnahme dient dazu, den Krafteingriff in den tieferen Bereich des Dübels und damit der umgebenden Schwelle oder Festen Fahrbahn zu verlagern. Allen Ausführungsformen ist gemeinsam, dass durch die Gestaltung des Dübels eine Abdichtung nach oben und innen erfolgt, wodurch sich der elektrische Widerstand des Schienenbefestigungssystems erhöht. Darüber hinaus wird beim Vorsehen einer elastischen Schürze der äußere Dübelschaft umgriffen, wodurch sich eine Spannungsreduzierung in der Betonschwelle im Dübelbereich erzielen lässt. Eine weitere Spannungsreduzierung in der Betonschwelle oder Festen Fahrbahn im Dübelbereich kann durch die anhand der an zwei Beispielen erläuterten Verlagerung des Krafteingriffs zwischen Schwellenschraube und Dübel in einen oberflächenferneren Bereich erzielen.

## Patentansprüche

1. Schraubdübel für das Einbetonieren in eine Eisenbahnschwelle oder Feste Fahrbahn und die kraftschlüssige Verbindung mit einer Schwellenschraube, umfassend:
- einen Gewindeabschnitt (14) mit außen am Schraubdübel (10) angeordneten Außengewindegängen (18) sowie innen im Schraubdübel angeordneten Innengewindegängen (19); und
- einen im Einbauzustand nahe der Dübelöffnung (26) gelegenen oberen Teilabschnitt (16) ohne Außengewinde;
**dadurch gekennzeichnet, dass**
am oberen Teilabschnitt (16) ein Dichtelement (22) aus einem Werkstoff mit hoher Elastizität angespritzt ist,
dessen Öffnungsquerschnitt geringer ist als eine zylindrische Innenwand (28) des oberen Teilabschnitts (16),
das sich über eine oberseitige Stirnfläche (24) des oberen Teilabschnitts (16) nach oben erstreckt, und
das im Einbauzustand eine sich über die oberseitige Stirnfläche (24) des oberen Teilabschnitts (16) hinaus nach oben erstreckende herauskragende Erhebung bildet sowie den freien Öffnungsquerschnitt des Innenraums des oberen Teilabschnitts (16) verringert.

2. Schraubdübel nach Anspruch 1,
**dadurch gekennzeichnet, dass** das Außengewinde (18) ein Rundgewinde ist.

3. Schraubdübel nach einem der vorhergehenden Ansprüche, weiterhin umfassend mindestens ein im Wesentlichen in Längsrichtung außen an dem Schraubdübel vorgesehenes Formschlusselement (20), vorzugsweise in Form mehrerer Stege.

4. Schraubdübel nach einem der vorhergehenden Ansprüche, **dadurch gekennzeichnet, dass** der Werkstoff mit hoher Elastizität zusätzlich zumindest bereichsweise am Außenumfang des oberen Teilabschnitts als nachgiebige Ummantelung (38) angeordnet ist.

5. Eisenbahnschwelle oder Feste Fahrbahn mit mindestens einem Schraubdübel nach einem der vorhergehenden Ansprüche.

6. Eisenbahnschwelle oder Feste Fahrbahn nach Anspruch 5, weiter umfassend eine Schwellenschraube, die einen zylinderförmigen Abschnitt besitzt, der ein Außengewinde aufweist; wobei
der Schraubdübel einen sich zur Einstecköffnung hin aufweitenden kegelförmigen Bereich aufweist.

7. Eisenbahnschwelle oder Feste Fahrbahn nach Anspruch 5, weiter umfassend eine Schwellenschraube, die einen ersten zylindrischen Abschnitt und einen zweiten zylindrischen Abschnitt aufweist, wobei
- der ersten zylindrische Abschnitt näher zum Schraubenkopf angeordnet ist als der zweite zylindrische Abschnitt und einen größeren Kerndurchmesser aufweist als der zweite zylindrische Abschnitt; und
- nur der zweite zylindrische Abschnitt zumindest bereichsweise ein Außengewinde aufweist.

## Claims

1. Screw anchor for embedding in the concrete of a railway sleeper or solid track and force-locking connection to a sleeper screw, comprising:
- a threaded section (14) with external thread turns (18) arranged on the outside of the screw anchor (10) as well as internal thread turns (19) arranged on the inside of the screw anchor; and
- an upper portion (16) with no external thread located close to the anchor opening (26) when fitted;
**characterised in that**
a sealing element (22) made of a material with high elasticity is applied to the upper portion (16) by injection moulding,
of which the opening cross-section is smaller than a cylindrical inner wall (28) of the upper portion (16),
which sealing element (22) extends upwards beyond an end face (24) at the top of the upper portion (16), and
which when fitted forms a projecting raised portion extending upwards beyond the end face (24) at the top of the upper portion (16) and reduces the free opening cross-section of the inner space of the upper portion (16).

2. Screw anchor according to claim 1, **characterised in that** the external thread (18) is a round thread.

3. Screw anchor according to any of the preceding claims, further comprising at least one form-locking element (20) provided on the outside of the screw anchor substantially in the longitudinal direction, preferably in the form of several ridges.

4. Screw anchor according to any of the preceding claims, **characterised in that** the material with high elasticity in addition in at least one region is arranged on the outer circumference of the upper portion as a flexible sheath (38).

5. Railway sleeper or solid track having at least one screw anchor according to any of the preceding claims.

6. Railway sleeper or solid track according to claim 5, further comprising a sleeper screw which has a cylindrical portion having an external thread; wherein
the screw anchor has a conical region widening towards the insertion opening.

7. Railway sleeper or solid track according to claim 5, further comprising a sleeper screw which has a first cylindrical portion and a second cylindrical portion, wherein
- the first cylindrical portion is arranged closer to the screw head than the second cylindrical portion and has a larger core diameter than the second cylindrical portion; and
- only the second cylindrical portion in at least one region has an external thread.

## Revendications

1. Vis-cheville destinée à être scellée dans le béton d'une traverse de chemin de fer ou d'une voie de roulement fixe et pour une connexion par serrage avec un tire-fond, comprenant :
- un segment fileté (14) avec des spires extérieures (18) disposées extérieurement sur la vis-cheville (10) et avec des spires intérieures (19) disposées intérieurement dans la vis-cheville ; et
- un segment partiel supérieur (16) sans filet extérieur situé à proximité de l'ouverture (26) de la cheville en état de montage ;
**caractérisée en ce qu'**
un élément d'étanchéité (22) constitué d'un matériau présentant une élasticité élevée est moulé par injection sur le segment partiel supérieur (16),
dont la section transversale d'ouverture est inférieure à une paroi intérieure cylindrique (28) du segment partiel supérieur (16),
et qui s'étend vers le haut sur une surface frontale de sommet (24) du segment partiel supérieur (16), et
qui, en état de montage, forme un rebord en saillie s'étendant vers le haut sur la surface frontale de sommet (24) du segment partiel supérieur (16) et réduit la section transversale d'ouverture libre à l'intérieur du segment partiel supérieur (16).

2. Vis-cheville selon la revendication 1,
**caractérisée en ce que** le filet extérieur (18) est un filet rond.

3. Vis-cheville selon l'une des revendications précédentes, comprenant en outre au moins élément d'ajustement mécanique (20) prévu sensiblement dans le sens de la longueur extérieurement sur la vis-cheville, préférentiellement sous la forme de plusieurs nervures.

4. Vis-cheville selon l'une des revendications précédentes, **caractérisée en ce que** le matériau présentant une élasticité élevée est en outre disposé au moins en partie sur la périphérie extérieure du segment partiel supérieur en tant que gaine (38) flexible.

5. Traverse de chemin de fer ou voie de roulement fixe avec au moins une vis-cheville selon l'une des revendications précédentes.

6. Traverse de chemin de fer ou voie de roulement fixe selon la revendication 5, comprenant en outre un tire-fond présentant un segment cylindrique avec un filet extérieur ; où
la vis-cheville présente une partie conique évasée vers l'ouverture d'insertion.

7. Traverse de chemin de fer ou voie de roulement fixe selon la revendication 5, comprenant en outre un tire-fond, présentant un premier segment cylindrique et un deuxième segment cylindrique, où
- le premier segment cylindrique est situé plus près de la tête de vis que le deuxième segment cylindrique et présente un diamètre d'âme supérieur à celui du deuxième segment cylindrique ; et
- le deuxième segment cylindrique est au moins partiellement pourvu d'un filet extérieur.
